# EUROPEAN PATENT SPECIFICATION

(11) **EP 3 034 861 B1**
(45) Date of publication and mention of the grant of the patent: **12.09.2018**
(21) Application number: 14382538.8
(22) Date of filing: 18.12.2014
(51) Int. Cl.: F03D 1/00, F03D 1/06, F03D 13/35

(54) **Balancing method of wind turbine rotors**
Ausgleichsverfahren von Windturbinenrotoren
Procédé d'équilibrage de rotors d'éolienne

(43) Date of publication of application: 22.06.2016
(73) Proprietor: Acciona Windpower S.A., 31621 Sarriguren, Navarra (ES)
(72) Inventor: ARLABÁN GABEIRAS, Teresa, 31621 Sarriguren (NAVARRA) (ES); GASTON LUJAMBIO, Ander, 31621 Sarriguren (NAVARRA) (ES); GOROSTIDI MAGAÑA, Alvaro, 31621 Sarriguren (NAVARRA) (ES); GARCÍA SAYÉS, José Miguel, 31621 Sarriguren (NAVARRA) (ES); NÚÑEZ POLO, Miguel, 31621 Sarriguren (NAVARRA) (ES)
(74) Representative: Pons

(56) References cited:
- EP-A2- 1 580 543
- CA-A1- 2 553 896
- CN-A- 103 335 059
- US-A1- 2003 141 721
- US-A1- 2013 119 663

## Description

### OBJECT OF THE INVENTION

The present invention relates to a wind turbine rotor balancing method which makes it possible to reduce the material and the time used to achieve that each one of the blades which integrate a rotor fulfil the specifications of mass and maximum permitted mass difference between them.

The object of the present invention is a wind turbine rotor balancing method which makes it possible to increase the possibility of grouping the blades in duos, in the case of two-bladed rotors, and in trios, for three-bladed rotors, with similar values of a parameter related to the mass of the blade.

### BACKGROUND OF THE INVENTION

To avoid the appearance of undesired loads for which the wind turbine has not been designed, the components thereof have to be manufactured in accordance with maximum dimensional and mass tolerances among others.

One of the most critical components in this sense are the rotor blades, since deviations in their nominal weight and in static moment with respect to the rotor axis can introduce high loads and vibrations in the wind turbine. These must not only be individually manufactured in accordance with maximum weight tolerances, the tolerance typically given as a percentage with respect to the nominal weight, but also verifying conditions in the ratio between the values taken by parameters of each of the two blades which form the rotor in the case of two-bladed rotors, or of the three blades which form the rotor in the case of three-bladed rotors.

These parameters are:
- Static moment with respect to the rotor axis;
- Maximum weight difference between the blades.

Typically, it is needed to make corrections in the blades to achieve that both the blades individually and the duos or trios of blades come within the specifications. To this purpose balancing chambers are generally disposed inside the blades to house the amount of material necessary to achieve it depending on the magnitude of the previous parameters.

Given the importance of the blades being perfectly within the aforementioned tolerances, it is typical that said grouping in duos or trios of blades for a rotor and the consequent correction, if necessary, are performed in the blade manufacturing plants.

Depending on the requirements and delivery periods, it is typical that each consecutive duo or trio of blades, i.e. consecutively manufactured, is grouped to form a rotor, this implying that it is needed to correct differences between the blades, typical due to dispersion in manufacturing, to form duos or trios of balanced blades so that they can be grouped as rotors.

Not carrying out a suitable correction of the dispersions between the blades to attain a suitable balancing of the rotors, to achieve that the resulting static moment of all of them on the rotor axis is zero, may have important repercussions in terms of loads and vibrations in the wind generators on which they are mounted which on occasions involve costly actions in situ to mitigate them once the blades have been installed in the wind turbine; being required to implement methods to perform rotor balancing in situ such as that disclosed in patent US5140856 A or in document *"*Reducing vibration by balancing rotor blades". Erneuerbare Energien 08/2009. Prúftechnik.

In the blade manufacturing facility, the step of measurement and/or characterization of the weight and/or static moment of the blades is performed. Some methods for the characterization of the static moment of the blades are described in patents EP2233904B1 and US4078422.

It is considered a valid approximation that a rotor is balanced when the vector addition of the static moments of the blades with respect to the rotor axis is zero. In general, it is considered that a rotor fulfils the specifications if the resulting static imbalance is below a threshold value that was taken into account when making the load and design calculations of the wind turbine.

US2003/141721A1 and CN103335059A disclose other prior art examples of wind turbine rotor balancing methods.

If said specifications are not accomplished with the blades as manufactured, the rotors must be balanced, in general achieving this a posteriori by placing masses at certain points of the blades.

The wind turbine rotor balancing method of the present invention reduces the required quantity of material to balance the rotors of a wind farm, with the resulting reduction in time, in addition to being even able to reduce the tolerances in the rotors coming close to zero tolerance and therefore reduce to a minimum the vibrations and periodical loads associated to the rotor mass imbalance, however small it is.

### DESCRIPTION OF THE INVENTION

The wind turbine rotor balancing method of the present invention comprises performing the identification of the blades which will form a wind turbine rotor, i.e. the grouping of blades to form rotors, in accordance with at least one parameter selected from the difference in weight between blades and the static moment of each one of them with respect to a reference point after a blade stockpiling step carried out in a stockpiling area with greater capacity than the stockpiling carried out in the facility where the blades are manufactured prior to the transporting step. In other words, when there are already a large number of blades manufactured and their parameters have been measured, the probability of having more blades with similar values of the parameters in accordance with which the blades are grouped is statistically increased, so that this grouping tends to be performed naturally.

The wind turbine rotor balancing method of the present invention comprises the following steps:
- a blade manufacturing step carried out in a blade manufacturing facility;
- a blade stockpiling step carried out in the blade manufacturing facility;
- a quantification step of the value of at least one parameter related to the mass of each blade;
- an identification step of the blades which will form a wind turbine rotor in accordance with the at least one parameter related to the mass of the blade;
- at least one step of transporting the blades from the blade manufacturing facility to a first blade stockpiling area;
- a blade stockpiling step carried out in the first stockpiling area, wherein the blade stockpiling step comprises the stockpiling of a larger number of blades than the number of blades comprising the rotor of the wind turbine;
wherein the identification step of the blades is carried out after the blade stockpiling step carried out in the first blade stockpiling area, wherein said first blade stockpiling area is of greater capacity than the stockpiling carried out in the blade manufacturing facility.

The identification step of the blades can be performed in the first blade stockpiling area.

Typically, the blade manufacturing facility has a second blade stockpiling area wherein the stockpiling of some blades can be performed, prior to the step of transporting the blades from the blade manufacturing facility to the first blade stockpiling area and whilst the deadlines and availability of means of transport so allow. However, typically the number of blades stockpiled prior to transport in this second blade stockpiling area is reduced. This brings as a consequence disparities between the values of the parameters related to the mass of said blades which may be large and would therefore lead to large imbalances in the rotors comprising them. To avoid this, in the state of the art said differences are corrected in the manufacturing facility so that already balanced rotors are delivered to the buyer, requiring for this large quantities of material.

Optionally, in the quantification step of the value of at least one parameter related to the mass of the blade one or several among the following parameters is quantified:
∘ the nominal mass of the blade;
∘ the centre of gravity of the blade;
∘ the static moment of the blade.

In the identification step of the blades which will form the wind turbine rotor in accordance with the at least one parameter related to the mass of the blade it is obtained as a result the blades which shall be mounted in the same wind turbine therefore forming the rotor thereof. Thus, for example, numbering in a wind farm of 30 wind turbines the rotors from 1 to 30, the blades are identified as 1.1, 1.2 1.3, 2.1, 2.2, 2.3, ..., and so on up to 30.1, 30.2, 30.3, where blades 1.1, 1.2, 1.3 are those which will be mounted on wind turbine 1, blades 2.1, 2.2, 2.3 are those which will be mounted on wind turbine 2, and so on and so forth until 30.1, 30.2, 30.3 which will be those mounted on wind turbine 30.

The first stockpiling area whereto the blades are transported from the manufacturing facility in the step of transporting the blades may be found several kilometres away from the manufacturing facility.

Optionally, the method further comprises a step of transporting the blades from the first blade stockpiling area to the wind turbine on site.

In the first blade stockpiling area, it is preferably carried out the stockpiling of a larger number of blades of the type supplied for the wind turbine specified than the stockpiling of blades of the same type carried out in an area allocated for said purpose in the vicinity of the manufacturing facility prior to the transporting step to the first stockpiling area.

The fact of performing the identification step of blades after the blade stockpiling step carried out in the first stockpiling area allows the grouping of the blades, understanding as grouping identifying the duos in two-bladed rotors, and/or trios in three-bladed rotors which will form the rotor of the wind turbine, starting from a population of blades greater than that available in the manufacturing facility, so that it manages to statistically increase the probability of having more blades with similar values of the parameter related to the blade mass.

Preferably, prior to the identification step of the blades, it is carried out in the first stockpiling area the stockpiling of a number of blades sufficient for the natural grouping of the blades in accordance with the values of the parameters related to the mass of the blades, i.e. a number which raises the probability of having more blades with similar values of the parameters related to the mass of the blades. It has been identified that from a number of blades equivalent to the number of blades of at least three wind turbine rotors the parameters indicative of the blades tend to be grouped in three groups naturally, minimising the quantity of mass required for the balancing. Thus preferably in the blade stockpiling step carried out in the first blade stockpiling area, the stockpiling of a number of blades equivalent to the number of blades of at least three wind turbine rotors is performed. In any case, it is preferably to stockpile as mainly blades as allowed by the delivery periods or dimensions of the means of transport selected.

In this way, the method of the present invention, as it makes the number of blades stockpiled prior to the identification step of the blades independent from the number of blades that it is possible to stockpile in the blade manufacturing facility, either due to the capacity of the manufacturing facility or due to delivery periods, provides the following advantages:
- On the one hand, the tolerances permitted in the rotor mass imbalance may be less, leading to a lower level of loads and vibrations when the wind turbine is in operation.
- Furthermore, the mass required for the rotor balancing shall be smaller, and may even be reduced, which means a lower final weight of the blades and a lower use of materials.
- Furthermore, in this way the blade mass distribution is not artificially altered, which would involve a change in the distribution of rigidities and in their natural frequency which would also alter its behaviour with respect to the design one.

### BRIEF DESCRIPTION OF THE DRAWINGS

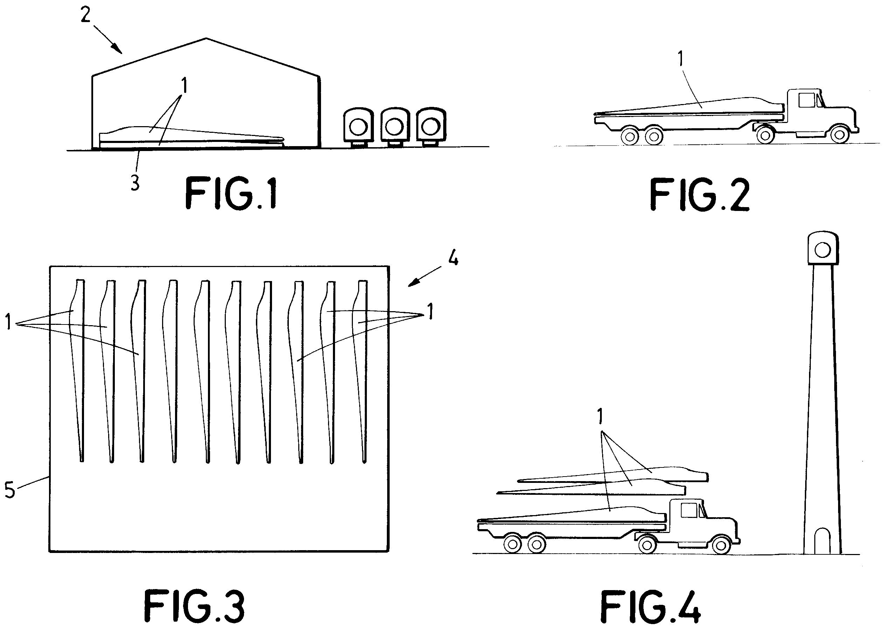

Figure 1 shows an elevational view of the blade manufacturing facility comprising a first blade stockpiling area of the wind turbine rotor balancing method of the present invention.
Figure 2 shows a schematic view which represents the step of transporting the blades from the blade manufacturing facility to the blade storage facility.
Figure 3 shows a plan view of the blade storage facility comprising a first blade stockpiling area wherein is carried out the blade grouping step of the wind turbine rotor balancing method of the present invention.
Figure 4 shows a schematic view which represents the step for transporting the already grouped blades from the blade storage facility to the wind turbine on site.

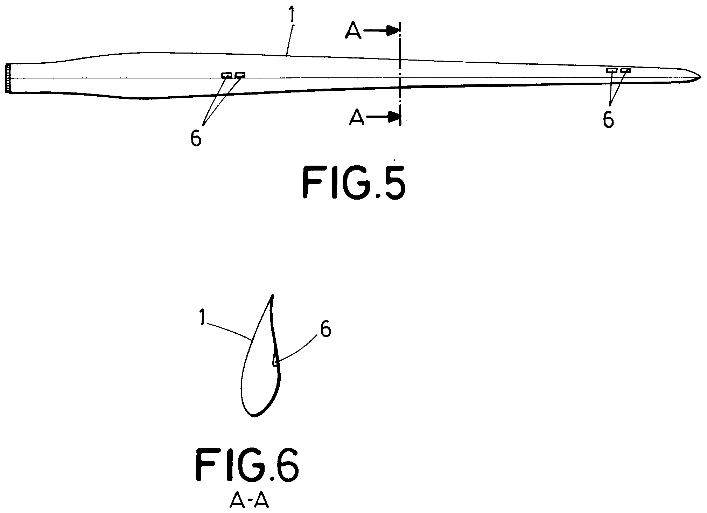

Figure 5 shows an elevational view of a blade with at least one balancing chamber to perform the rotor balancing step of the wind turbine rotor balancing method of the present invention.
Figure 6 shows an AA sectional view of figure 5.

### PREFERRED EMBODIMENT OF THE INVENTION

The wind turbine rotor balancing method of the present invention, comprising the following steps, shall be described in detail below:
- a blade (1) manufacturing step carried out in a blade (1) manufacturing facility (2);
- a quantification step of the value of at least one parameter related to the mass of the blade (1);
- an identification step of the blades (1) which will form a wind turbine (7) rotor in accordance with the at least one parameter related to the mass of each blade;
- at least one step of transporting the blades from the blade (1) manufacturing facility (2) to a first blade (1) stockpiling area (5);
- a blade stockpiling step (1) carried out in the first stockpiling area (5), wherein the blade stockpiling step (1) comprises the stockpiling of a larger number of blades (1) than the number of blades (1) comprising the rotor (3) of the wind turbine, wherein the identification step of the blades is carried out after the blade stockpiling step (1).

The identification step of the blades (1) can be performed in the first blade stockpiling area.

In this example of preferred embodiment, the stockpiling of at least a number of blades equivalent to the number of blades of at least three rotors of the wind turbine (7) is carried out in the blade stockpiling step (1).

The identification step of the blades (1) which will form a wind turbine (7) rotor in accordance with the at least one parameter related to the mass of each blade (1) comprises performing a comparison between the parameters related to the mass of each one of the blades (1).

The identification step of the blades (1) which will form a wind turbine (7) rotor in accordance with the at least one parameter related to the mass of each blade (1) further comprises grouping the blades (1) in groups of as many blades (1) as blades (1) that each rotor has by criteria of proximity of the parameters related to the mass of each blade (1).

The blades (1) are identified and logs are saved of the characteristics of each blade of that rotor in case it was necessary to replace or repair any of the blades (1). Thus the desired characteristics are known for the blade (1) which would have to replace the one that was broken.

The quantification step of the value of at least one parameter related to the mass of the blade is carried out in the blade (1) manufacturing facility (2). This parameter related to the mass of the blade is quantified using one or two scales, which allow determining the mass of the blade (1), the static moment of the blade (1) and/or the centre of gravity of the blade (1).

The parameter related to the mass of the blade (1) calculated is one or several of among the following:
∘ the nominal mass of the blade (1);
∘ the centre of gravity of the blade (1);
∘ the static moment of the blade (1).

In a first example of embodiment, the wind turbine rotor balancing method (7) further comprises the following steps:
- a step of estimating a resulting static moment of the blades (1) which will form a wind turbine (7) rotor with respect to a common geometric reference;
- a step of comparing the resulting static moment with a first predetermined threshold; and
- a rotor balancing step if the resulting static moment is above the first predetermined threshold.

Said steps are performed for each one of the rotors resulting from the identification step of the blades (1).

The common geometric reference with respect to which the step of estimating the resulting static moment of each group of blades (1) is carried out is the point where the axes of the blades (1) cross.

The first threshold determined sets the level from which rotor balancing must be performed. To perform the balancing, masses will be included in balancing chambers (6) provided for said purpose in the blades (1).

In a second example of embodiment alternative to the first, the wind turbine rotor balancing method further comprises the following steps:
- a calculation step for each one of the possible combinations of the blades (1) in duos which will form a wind turbine (7) rotor of the difference between the static moments of the blades (1);
- a step of determining the greater of the differences of the static moments of the blades (1) of each one of the possible combinations of the blades (1) in duos which will form a wind turbine (7) rotor;
- a step of comparing the greater of the differences of the static moments of the blades (1) with a second predetermined threshold; and
- a rotor balancing step if the greater of the differences of the static moments of the blades (1) exceeds the second predetermined threshold.

For the first of the examples described above, in the rotor balancing step a monitoring is performed of the resulting static moment of each group of blades (1) resulting from the identification step of the blades (1).

To perform the rotor balancing step of the previous examples, a balancing mass is placed in the interior of at least one blade (1) of each group of blades (1). Typically at least one balancing chamber (6) is disposed in the interior of each blade (1), the purpose of which is to house the quantity of mass necessary to achieve that the imbalance is within tolerances. This balancing chamber shall be located in a predetermined position, being preferably located substantially distanced from the blade root with the aim of cancelling out or introducing within tolerances the resulting static moment of the rotor with respect to the axis of rotation with the smallest quantity of mass necessary.

Alternatively, in the rotor balancing step of the previous examples, a balancing mass is placed in the rotor hub.

The rotor balancing step of the first example of embodiment further comprises a step of estimating the quantity of mass to be included so that the resulting static moment is below a third predetermined threshold which may also be the first predetermined threshold.

In any of the two previous examples of embodiment, the rotor balancing step is carried out:
- with the blades not mounted in the hub, or
- with the blades mounted in the hub but without mounting the wind turbine assembly, or
- with the blades mounted in the hub and in the wind turbine assembly.

Preferably, the balancing step is carried out in the first stockpiling area (5) or in a wind farm.

The first blade (1) stockpiling area (5) wherein the blade (1) stockpiling step is carried out prior to the identification step of the blades (1) is in an intermediate point between the blade (1) manufacturing facility (2) and a wind farm, like a depot close to a port area, a depot disposed in a port area or a boat for transporting blades (1), or the first blade (1) stockpiling area (5) wherein the blade (1) stockpiling step is carried out is in the wind farm.

## Claims

1. Wind turbine rotor balancing method comprising the following steps:
• a blade (1) manufacturing step carried out in a blade (1) manufacturing facility (2);
• a blade (1) stockpiling step carried out in the blade (1) manufacturing facility (2);
• a quantification step of the value of at least one parameter related to the mass of the blade (1);
• an identification step of the blades (1) which will form a wind turbine (7) rotor in accordance with the at least one parameter related to the mass of each blade;
• at least one step of transporting the blades from the blade (1) manufacturing facility (2) to a first blade (1) stockpiling area (5);
• a blade stockpiling step carried out in the first blade (1) stockpiling area (5), wherein the blade stockpiling step comprises the stockpiling of a larger number of blades (1) than the number of blades (1) comprising the rotor (3) of the wind turbine; wherein the identification step of the blades is carried out after the blade stockpiling step carried out in the first blade (1) stockpiling area (5), wherein said first blade (1) stockpiling area (5) is of greater capacity than the stockpiling carried out in the blade (1) manufacturing facility (2).

2. Wind turbine rotor balancing method according to claim 1, wherein in the blade stockpiling step (1) carried out in the first blade (1) stockpiling area (5), the stockpiling of a number of blades equivalent to the number of blades of at least three rotors of the wind turbine (7) is performed.

3. Wind turbine rotor balancing method according to any of the preceding claims, wherein the identification step of the blades (1) which will form a wind turbine (7) rotor in accordance with the at least one parameter related to the mass of each blade (1) comprises performing a comparison between the parameters related to the mass of each one of the blades (1).

4. Wind turbine rotor balancing method according to claim 3, wherein the identification step of the blades (1) which will form a wind turbine (7) rotor in accordance with the at least one parameter related to the mass of each blade (1) comprises grouping the blades (1) in groups of as many blades (1) as blades (1) that each rotor has by criteria of proximity of the parameters related to the mass of each blade (1).

5. Wind turbine rotor balancing method according to any of the preceding claims, wherein the quantification step of the value of at least one parameter related to the mass of each blade (1) is carried out in the blade (1) manufacturing facility (2).

6. Wind turbine rotor balancing method according to any of the preceding claims, wherein in the quantification step of the value of at least one parameter related to the mass of the blade (1) one or several among the following is quantified:
∘ the nominal mass of the blade (1);
∘ the centre of gravity of the blade (1);
∘ the static moment of the blade (1).

7. Wind turbine rotor balancing method according to any of the preceding claims, further comprising the following steps:
• a step of estimating a resulting static moment of the blades (1) which will form a wind turbine (7) rotor with respect to a common geometric reference;
• a step of comparing the resulting static moment with a first predetermined threshold; and, a rotor balancing step if the resulting static moment is above the first predetermined threshold.

8. Wind turbine rotor balancing method according to any of claims 1 to 6, further comprising the following steps:
• a calculation step for each one of the possible combinations of the blades (1) in duos which will form a wind turbine (7) rotor of the difference between the static moments of the blades (1);
• a step of determining the greater of the differences of the static moments of the blades (1) of each one of the possible combinations of the blades (1) in duos which will form a wind turbine (7) rotor;
• a step of comparing the greater of the differences of the static moments of the blades (1) with a second predetermined threshold; and, a rotor balancing step if the greater of the differences of the static moments of the blades (1) exceeds the second predetermined threshold.

9. Wind turbine rotor balancing method according to any of claims 7 to 8, wherein the rotor balancing step comprises a step of placing a balancing mass in the interior of at least one blade (1) of each group of blades (1) to perform the balancing step.

10. Wind turbine rotor balancing method according to any of claims 7 to 8, wherein the rotor balancing step comprises a step of placing a balancing mass in the rotor hub.

11. Wind turbine rotor balancing method according to claim 7, wherein the rotor balancing step further comprises a step of estimating the quantity of mass to place so that the resulting static moment is below a third predetermined threshold.

12. Wind turbine rotor balancing method according to any of claims 7 to 11, wherein the rotor balancing step is carried out:
• with the blades (1) not mounted in the hub, or
• with the blades (1) mounted in the hub but without mounting the wind turbine assembly, or
• with the blades (1) mounted in the hub and in the wind turbine assembly.

13. Wind turbine rotor balancing method according to any of claims 7 to 12, wherein the balancing step is carried out in the first stockpiling area (5) or in a wind farm.

14. Wind turbine rotor balancing method according to any of the preceding claims, wherein the first blade (1) stockpiling area (5) wherein the blade (1) stockpiling step is carried out is in an intermediate point between the blade (1) manufacturing facility (2) and a wind farm, like a depot close to a port area, a depot disposed in a port area or a boat for transporting blades (1).

15. Wind turbine rotor balancing method according to any of claims 1 to 13, wherein the first blade (1) stockpiling area (5) wherein the blade (1) stockpiling step is carried out is in the wind farm.

## Patentansprüche

1. Ausgleichsverfahren für Windturbinenrotoren, das die folgenden Schritte umfasst:
• einen Herstellungsschritt der Rotorblätter (1), ausgeführt in einer Fertigungsanlage (2) für Rotorblätter (1);
• einen Lagerungsschritt der Rotorblätter (1), ausgeführt in der Fertigungsanlage (2) für Rotorblätter (1);
• einen Quantifizierungsschritt des Werts von mindestens einem Parameter bezüglich der Masse des Rotorblatts (1);
• einen Identifizierungsschritt der Rotorblätter (1), die einen Rotor für Windturbinen (7) gemäß mindestens einem Parameter bezüglich der Masse jedes Rotorblatts bilden werden;
• mindestens einen Schritt zum Transportieren der Rotorblätter von der Fertigungsanlage (2) für Rotorblätter (1) zu einem ersten Lagerungsbereich (5) für Rotorblätter (1);
• einen Lagerungsschritt der Rotorblätter, ausgeführt in dem ersten Lagerungsbereich (5) für Rotorblätter (1), wobei der Lagerungsschritt für Rotorblätter die Lagerung einer größeren Anzahl von Rotorblättern (1) als die Anzahl von Rotorblättern (1), die den Rotor (3) der Windturbine umfassen, umfasst;
wobei der Identifizierungsschritt der Rotorblätter nach dem Lagerungsschritt der Rotorblätter ausgeführt wird, der in dem ersten Lagerungsbereich (5) für Rotorblätter (1) ausgeführt wird, wobei der erste Lagerungsbereich (5) für Rotorblätter (1) eine größere Kapazität als die Lagerung hat, die in der Fertigungsanlage (2) für Rotorblätter (1) ausgeführt wird.

2. Ausgleichsverfahren für Windturbinenrotoren nach Anspruch 1, wobei in dem Lagerungsschritt der Rotorblätter (1), der in dem ersten Lagerungsbereich (5) für Rotorblätter (1) ausgeführt wird, die Lagerung einer Anzahl von Rotorblättern entsprechend der Anzahl von Rotorblättern von mindestens drei Rotoren der Windturbine (7) durchgeführt wird.

3. Ausgleichsverfahren für Windturbinenrotoren nach einem der vorhergehenden Ansprüche, wobei der Identifizierungsschritt der Rotorblätter (1), die einen Rotor für Windturbinen (7) gemäß mindestens einem Parameter bezüglich der Masse jedes Rotorblatts (1) bilden werden, das Durchführen eines Vergleichs zwischen den Parametern bezüglich der Masse jedes einzelnen Rotorblatts (1) umfasst.

4. Ausgleichsverfahren für Windturbinenrotoren nach Anspruch 3, wobei der Identifizierungsschritt der Rotorblätter (1), die einen Rotor für Windturbinen (7) gemäß mindestens einem Parameter bezüglich der Masse jedes Rotorblatts (1) bilden werden, das Zusammenfassen der Rotorblätter (1) in Gruppen von so vielen Rotorblättern (1) wie Rotorblätter (1), die jeder Rotor hat, durch Kriterien der Nähe der Parameter bezüglich der Masse jedes Rotorblatts (1) umfasst.

5. Ausgleichsverfahren für Windturbinenrotoren nach einem der vorhergehenden Ansprüche, wobei der Quantifizierungsschritt des Werts von mindestens einem Parameter bezüglich der Masse von jedem Rotorblatt (1) in der Fertigungsanlage (2) für Rotorblätter (1) ausgeführt wird.

6. Ausgleichsverfahren für Windturbinenrotoren nach einem der vorhergehenden Ansprüche, wobei in dem Quantifizierungsschritt des Werts von mindestens einem Parameter bezüglich der Masse der Rotorblätter (1) einer oder mehrere unter Folgendem quantifiziert wird:
∘ die Nennmasse des Rotorblatts (1);
∘ der Schwerpunkt des Rotorblatts (1);
∘ das statische Moment des Rotorblatts (1).

7. Ausgleichsverfahren für Windturbinenrotoren nach einem der vorhergehenden Ansprüche, das ferner die folgenden Schritte umfasst:
• einen Schritt zum Schätzen eines resultierenden statischen Moments der Rotorblätter (1), die einen Rotor für Windturbinen (7) bezüglich einer gemeinsamen geometrischen Referenz bilden werden;
• einen Schritt zum Vergleichen des resultierenden statischen Moments mit einem ersten vorbestimmten Schwellenwert; und einen Rotorausgleichsschritt, wenn das resultierende statische Moment über dem ersten vorbestimmten Schwellenwert liegt.

8. Ausgleichsverfahren für Windturbinenrotoren nach einem der Ansprüche 1 bis 6, das ferner die folgenden Schritte umfasst:
• einen Berechnungsschritt des Unterschieds zwischen den statischen Momenten der Rotorblätter (1) für jede der möglichen Kombinationen der Rotorblätter (1) in Duos, die einen Rotor für Windturbinen (7) bilden werden;
• einen Schritt zum Bestimmen des größeren der Unterschiede der statischen Momente der Rotorblätter (1) von jeder der möglichen Kombinationen der Rotorblätter (1) in Duos, die einen Rotor für Windturbinen (7) bilden werden;
• einen Schritt zum Vergleichen des größeren der Unterschiede der statischen Momente der Rotorblätter (1) mit einem zweiten vorbestimmten Schwellenwert; und einen Rotorausgleichsschritt, wenn der größere der Unterschiede der statischen Momente der Rotorblätter (1) den zweiten vorbestimmten Schwellenwert überschreitet.

9. Ausgleichsverfahren für Windturbinenrotoren nach einem der Ansprüche 7 bis 8, wobei der Rotorausgleichsschritt einen Schritt zum Platzieren einer Ausgleichsmasse in dem Inneren von mindestens einem Rotorblatt (1) von jeder Gruppe von Rotorblättern (1) umfasst, um den Ausgleichsschritt durchzuführen.

10. Ausgleichsverfahren für Windturbinenrotoren nach einem der Ansprüche 7 bis 8, wobei der Rotorausgleichsschritt einen Schritt zum Platzieren einer Ausgleichsmasse in der Rotornabe umfasst.

11. Ausgleichsverfahren für Windturbinenrotoren nach Anspruch 7, wobei der Rotorausgleichsschritt ferner einen Schritt zum Schätzen der Menge der zu platzierenden Masse umfasst, sodass das resultierende statische Moment unter einem dritten vorbestimmten Schwellenwert liegt.

12. Ausgleichsverfahren für Windturbinenrotoren nach einem der Ansprüche 7 bis 11, wobei der Rotorausgleichsschritt wie folgt ausgeführt wird:
• mit den Rotorblättern (1), die nicht in der Nabe montiert sind, oder
• mit den Rotorblättern (1), die in der Nabe montiert sind, aber ohne Montage der Windturbinenanordnung, oder
• mit den Rotorblättern (1), die in der Nabe und in der Windturbinenanordnung montiert sind.

13. Ausgleichsverfahren für Windturbinenrotoren nach einem der Ansprüche 7 bis 12, wobei der Ausgleichsschritt in dem ersten Lagerungsbereich (5) oder in einem Windpark ausgeführt wird.

14. Ausgleichsverfahren für Windturbinenrotoren nach einem der vorhergehenden Ansprüche, wobei der erste Lagerungsbereich (5) für Rotorblätter (1), an dem der Lagerungsschritt der Rotorblätter (1) ausgeführt wird, an einem Zwischenpunkt zwischen der Fertigungsanlage (2) für Rotorblätter (1) und einem Windpark liegt, wie ein Depot in der Nähe eines Hafenbereichs, ein Depot, das in einem Hafenbereich liegt oder ein Schiff zum Transportieren von Rotorblättern (1).

15. Ausgleichsverfahren für Windturbinenrotoren nach einem der Ansprüche 1 bis 13, wobei der erste Lagerungsbereich (5) für Rotorblätter (1), an dem der Lagerungsschritt der Rotorblätter (1) ausgeführt wird, in dem Windpark liegt.

## Revendications

1. Procédé d'équilibrage de rotor d'éolienne comprenant les étapes suivantes :
• une étape de fabrication de pales (1) réalisée dans une infrastructure de fabrication (2) de pales (1) ;
• une étape de stockage de pales (1) réalisée dans l'infrastructure de fabrication (2) de pales (1) ;
• une étape de quantification de la valeur d'au moins un paramètre relatif à la masse de la pale (1) ;
• une étape d'identification des pales (1) qui formeront un rotor d'éolienne (7) selon le au moins un paramètre relatif à la masse de chaque pale ;
• au moins une étape consistant à transporter les pales de l'infrastructure de fabrication (2) de pales (1) à une première zone de stockage (5) de pales (1) ;
• une étape de stockage de pales réalisée dans la première zone de stockage (5) de pales (1), dans lequel l'étape de stockage de pales comprend le stockage d'un plus grand nombre de pales (1) que le nombre de pales (1) comprenant le rotor (3) de l'éolienne ;
dans lequel l'étape d'identification des pales est réalisée après l'étape de stockage de pales réalisée dans la première zone de stockage (5) de pales (1), dans lequel ladite première zone de stockage (5) de pales (1) a une capacité plus grande que le stockage réalisé dans l'infrastructure de fabrication (2) de pales (1).

2. Procédé d'équilibrage de rotor d'éolienne selon la revendication 1, dans lequel dans l'étape de stockage de pales (1) réalisée dans la première zone de stockage (5) de pales (1), le stockage d'un nombre de pales équivalent au nombre de pales d'au moins trois rotors de l'éolienne (7) est mis en oeuvre.

3. Procédé d'équilibrage de rotor d'éolienne selon l'une quelconque des revendications précédentes, dans lequel l'étape d'identification des pales (1) qui formeront un rotor d'éolienne (7) selon le au moins un paramètre relatif à la masse de chaque pale (1) comprend la réalisation d'une comparaison entre les paramètres relatifs à la masse de chacune des pales (1).

4. Procédé d'équilibrage de rotor d'éolienne selon la revendication 3, dans lequel l'étape d'identification des pales (1) qui formeront un rotor d'éolienne (7) selon le au moins un paramètre relatif à la masse de chaque pale (1) comprend le regroupement des pales (1) en groupes ayant autant de pales (1) que de pales (1) de chaque rotor par critère de proximité des paramètres relatifs à la masse de chaque pale (1).

5. Procédé d'équilibrage de rotor d'éolienne selon l'une quelconque des revendications précédentes, dans lequel l'étape de quantification de la valeur d'au moins un paramètre relatif à la masse de chaque pale (1) est réalisée dans l'infrastructure de fabrication (2) de pales (1).

6. Procédé d'équilibrage de rotor d'éolienne selon l'une quelconque des revendications précédentes, dans lequel dans l'étape de quantification de la valeur d'au moins un paramètre relatif à la masse de la pale (1) un ou plusieurs des éléments suivants est quantifié :
∘ la masse nominale de la pale (1) ;
∘ le centre de gravité de la pale (1) ;
∘ le moment statique de la pale (1).

7. Procédé d'équilibrage de rotor d'éolienne selon l'une quelconque des revendications précédentes, comprenant en outre les étapes suivantes :
• une étape consistant à estimer un moment statique consécutif des pales (1) qui formeront un rotor d'éolienne (7) par rapport à une référence géométrique commune ;
• une étape consistant à comparer le moment statique consécutif avec un premier seuil prédéterminé ; et, une étape d'équilibrage de rotor si le moment statique consécutif est au-dessus du premier seuil prédéterminé.

8. Procédé d'équilibrage de rotor d'éolienne selon l'une quelconque des revendications 1 à 6, comprenant en outre les étapes suivantes :
• une étape de calcul pour chacune des combinaisons possibles des pales (1) en duo qui formeront un rotor d'éolienne (7) de la différence entre les moments statiques des pales (1) ;
• une étape consistant à déterminer la plus grande différence des moments statiques des pales (1) de chacune des combinaisons possibles des pales (1) en duo qui formeront un rotor d'éolienne (7) ;
• une étape consistant à comparer la plus grande différence des moments statiques des pales (1) avec un deuxième seuil prédéterminé ; et, une étape d'équilibrage de rotor si la plus grande différence des moments statiques des pales (1) dépasse le deuxième seuil prédéterminé.

9. Procédé d'équilibrage de rotor d'éolienne selon l'une quelconque des revendications 7 à 8, dans lequel l'étape d'équilibrage de rotor comprend une étape consistant à placer une masse d'équilibrage à l'intérieur d'au moins une pale (1) de chaque groupe de pales (1) pour mettre en oeuvre l'étape d'équilibrage.

10. Procédé d'équilibrage de rotor d'éolienne selon l'une quelconque des revendications 7 à 8, dans lequel l'étape d'équilibrage de rotor comprend une étape consistant à placer une masse d'équilibrage dans le moyeu du rotor.

11. Procédé d'équilibrage de rotor d'éolienne selon la revendication 7, dans lequel l'étape d'équilibrage de rotor comprend en outre une étape consistant à estimer la quantité de masse à placer de sorte que le moment statique consécutif soit en dessous d'un troisième seuil prédéterminé.

12. Procédé d'équilibrage de rotor d'éolienne selon l'une quelconque des revendications 7 à 11, dans lequel l'étape d'équilibrage du rotor est réalisée :
• avec les pales (1) non montées dans le moyeu, ou
• avec les pales (1) montées dans le moyeu mais sans le montage de l'assemblage de l'éolienne, ou
• avec les pales (1) montées dans le moyeu et dans l'assemblage de l'éolienne.

13. Procédé d'équilibrage de rotor d'éolienne selon l'une quelconque des revendications 7 à 12, dans lequel l'étape d'équilibrage est réalisée dans la première zone de stockage (5) ou dans un parc éolien.

14. Procédé d'équilibrage de rotor d'éolienne selon l'une quelconque des revendications précédentes, dans lequel la première zone de stockage (5) de pales (1) dans laquelle l'étape de stockage de pales (1) est réalisée est sur un point intermédiaire entre l'infrastructure de fabrication (2) de pales (1) et un parc éolien, comme un entrepôt proche d'une zone portuaire, un entrepôt déposé dans une zone portuaire ou un bateau pour le transport de pales (1).

15. Procédé d'équilibrage de rotor d'éolienne selon l'une quelconque des revendications 1 à 13, dans lequel la première zone de stockage (5) de pales (1) dans laquelle l'étape de stockage de pales (1) est réalisée est dans le parc éolien.
